# EUROPEAN PATENT SPECIFICATION

(11) **EP 3 561 498 B1**
(45) Date of publication and mention of the grant of the patent: **12.02.2025**
(21) Application number: 19168283.0
(22) Date of filing: 09.04.2019
(51) Int. Cl.: G01N 27/404

(54) **METHOD FOR A PRINTED ELECTROCHEMICAL GAS SENSOR**
VERFAHREN FÜR EINEN GEDRUCKTEN ELEKTROCHEMISCHEN GASSENSOR
PROCÉDÉ POUR CAPTEUR DE GAZ ÉLECTROCHIMIQUE IMPRIMÉ

(30) Priority: 13.04.2018 US 201862657293 P
(43) Date of publication of application: 30.10.2019
(73) Proprietor: Honeywell International Inc., Morris Plains, NJ 07950 (US)
(72) Inventor: MU, Qinghui, Morris Plains, NJ New Jersey 07950 (US); LIU, Ling, Morris Plains, NJ New Jersey 07950 (US); LIANG, Feng, Morris Plains, NJ New Jersey 07950 (US)
(74) Representative: Haseltine Lake Kempner LLP

(56) References cited:
- EP-A1- 2 950 090
- US-A1- 2014 311 905
- US-B2- 8 840 765

## Description

### BACKGROUND

Electrochemical gas sensors are well known for detecting and quantifying toxic gases such as carbon monoxide, oxygen and the like. Such sensors can be implemented using electrochemical cells. Electrochemical sensors traditionally comprise a gas diffusion working (or sensing) electrode, often based on a platinum or graphite/platinum catalyst dispersed on polytetrafluorethylene (PTFE) tape. The target gas is reacted at this electrode while a balancing reaction takes place at the counter electrode. The electrodes are contained within an outer housing which contains a liquid electrolyte, such as sulfuric acid. The gas typically enters the housing through a controlled diffusion access port, which regulates the ingress of target gas into the cell. The gas reacts at the electrode and affects the electrical output of the sensor.

US 2014/0311905 relates to a printed gas sensor. US 8,840,765 relates to an oxygen sensor with microporous electrolyte layer and partially open cover membrane. EP 2950090 relates to an electrochemical gas sensor including a plurality of electrodes at least one of which is formed of a catalyst/binder slurry which is halftone printed onto a substrate, the composite printed element and substrate are sintered to form the electrode.

### SUMMARY

The invention is defined by the appended claims.

These and other features will be more clearly understood from the following detailed description taken in conjunction with the accompanying drawings and claims.

### BRIEF DESCRIPTION OF THE DRAWINGS

For a more complete understanding of the present invention, reference is now made to the following brief description, taken in connection with the accompanying drawings and detailed description, wherein like reference numerals represent like parts.
FIG. 1 illustrates a cross-sectional view of an electrochemical sensor produced according to the method of the present invention.
FIG. 2 illustrates a detailed cross-sectional view of an electrochemical sensor produced according to the method of the present invention.

### DETAILED DESCRIPTION

It should be understood at the outset that although illustrative implementations of one or more embodiments are illustrated below, the disclosed systems and methods may be implemented using any number of techniques, whether currently known or not yet in existence. The invention should in no way be limited to the illustrative implementations, drawings, and techniques illustrated below, but may be modified within the scope of the appended claims.

The following brief definition of terms shall apply throughout the application:

The term "comprising" means including but not limited to, and should be interpreted in the manner it is typically used in the patent context;

The phrases "in one embodiment," "according to one embodiment," and the like generally mean that the particular feature, structure, or characteristic following the phrase may be included in at least one embodiment of the present invention, and may be included in more than one embodiment of the present invention (importantly, such phrases do not necessarily refer to the same embodiment);

If the specification describes something as "exemplary" or an "example," it should be understood that refers to a non-exclusive example;

The terms "about" or "approximately" or the like, when used with a number, may mean that specific number, or alternatively, a range in proximity to the specific number, as understood by persons of skill in the art field (for example ±10%); and

If the specification states a component or feature "may," 29 "can," "could," "should," "would," "preferably," "possibly," "typically," "optionally," "for example," "often," or "might" (or other such language) be included or have a characteristic, that particular component or feature is not required to be included or to have the characteristic. Such component or feature may be optionally included, or it may be excluded.

Embodiments may reduce electrolyte leakage within an electrochemical sensor and/or improve contact between the electrolyte and a plurality of electrodes. The electrodes are formed on a substrate and may contact ambient gas via diffusion holes through the substrate. The electrodes in the sensor may participate in electrochemical reactions via contact with the electrolyte, and may also prevent electrolyte leaking from the diffusion holes. However, in some electrochemical sensors, the electrodes may not be robust enough to prevent electrolyte leakage through the diffusion holes, particularly during high humidity (e.g., more than 95% relative humidity (RH)). Meanwhile, the preparation of the catalyst paste for forming the electrode(s) may easily introduce moisture into the electrochemical sensor, which may have a negative effect on the printing process, and may lead to the electrodes connecting during the printing formation process (and may result in a short out within the sensor).

When traditionally printing (or otherwise applying) the electrolyte on the electrode(s), there may be a high rate of failure because the electrode comprises a hydrophobic material, while the electrolyte is hydrophilic. For effective functioning of the electrochemical sensor, the electrolyte must contact the electrode, and in some cases permeate and/or wet the electrode material.

Embodiments comprise preparing a homogenous catalyst paste for forming an electrode on a substrate which can remove and/or prevent moisture from pervading the electrode and may result in a robust electrode with resistance to leakage through the diffusion holes during high humidity (more than 95% RH). Additionally, embodiments comprise changing the concentration of the mixture of the perfluorinated ion solution and a catalyst (Pt, Au, Ru, Ir, Ag powder, carbon black, graphite, and/or a combination thereof) and solve the problem of leakage from the diffusion holes during high humidity.

Additionally, embodiments comprise printing a transition layer between the electrodes and the electrolyte, where the transition layer may facilitate contact between the electrodes and the electrolyte. The transition layer comprises a thin, hydrophilic material. The transition layer is applied to the electrodes before the electrolyte is applied to the electrodes.

In embodiments, a perfluorinated ion solution (e.g., GEFC, 5 wt% in DMF, Golden Energy Fuel Cell Co., Ltd.) is used as a binder in a catalyst paste which is printed onto a substrate to form electrodes through annealing. The method comprises mixing the perfluorinated ion solution with a catalyst (e.g., Pt, Au, Ru, Ir, Ag powder, carbon black, graphite, and/or a combination thereof). Then, the mixture is concentrated to make a paste with a suitable viscosity for printing. The paste is printed on to a substrate comprising diffusion holes to form electrodes through annealing. The diffusion holes are formed into the substrate and extend through the substrate thickness.

Typically, the mixing process and/or printing process may be performed in an open system where the mixture may be exposed to an ambient environment, which may allow moisture from the ambient air to penetrate the electrodes and/or other elements of the sensor during printing. The mixing process and optionally the printing process are completed under a vacuum, to prevent moisture and/or other substances from the ambient environment from penetrating the materials of the layers of the electrochemical sensor.

In the method of the present invention, concentrating of the perfluorinated ion solution and subsequent mixing with a catalyst are combined into a single step. These processes are completed using ultrasonication to generate a slurry made of the perfluorinated ion solution and catalyst powder in a homogenous suspension. Additionally, the preparation is performed by vacuum distillation in a relatively closed system with negative-pressure condition. In particular, the process conditions are approximately 200-300 Pa (2-3 mbar) and approximately 40-50°C. The viscosity of the mixture may be controlled by monitoring the rotation speed of a magnetic stirrer.

The lower temperature (e.g., 40-50°C) of the method may not cause undesirable binding of the perfluorinated ion solution. Additionally, the concentrating process may produce more interaction between the perfluorinated ion solution binder and the catalyst particles than traditional simple mixing of concentrated perfluorinated ion solution and catalyst powder, where the interaction contributes to the strength and robustness of the electrodes and may prevent electrolyte leakage in the final sensor.

The method facilitates the printing of a hydrophilic electrolyte onto hydrophobic electrodes. The method comprises printing a transition layer onto the electrodes before applying an electrolyte. The transition layer comprises a water-immiscible solvent and a hydrophilic, inert powder. The added transition layer may not significantly thicken the electrode(s), because the same stencil and/or template may be used during printing of the electrode and printing of the transition layer, and the printed hydrophilic particles of the transition layer may disperse or otherwise fit into holes and/or spaces created on the surface of the electrodes by the catalyst of the electrodes. In some embodiments, there may be substantially no change in the thickness of the electrode due to adding of the transition layer. With the transition layer in place on the surface of the electrode (opposite the substrate and/or direct towards the electrolyte), the surface of the electrodes may become more hydrophilic, and the electrolyte can be more easily printed onto the electrodes. The transition layer may be thin enough to not interfere with interaction between the electrodes and the electrolyte. In some embodiments, the transition layer may comprise conductive properties configured to allow for electric communication between the electrodes and the electrolyte.

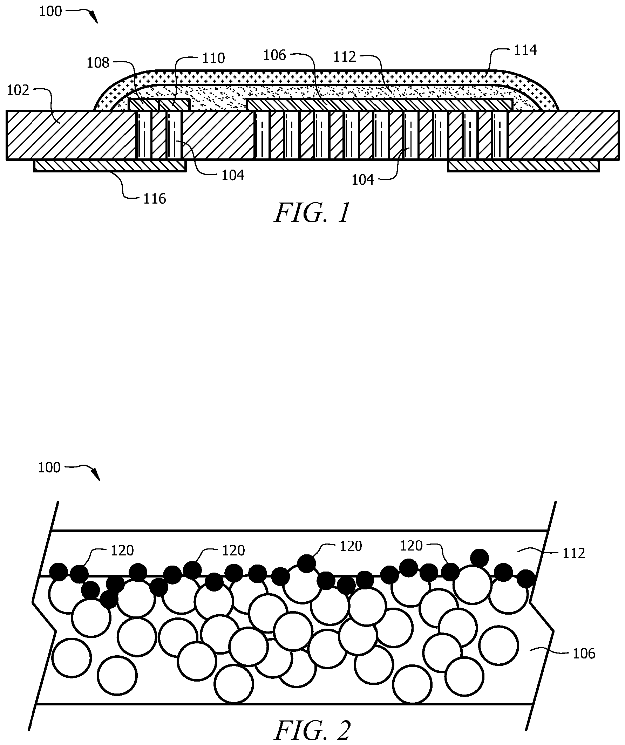

Referring to FIG. 1, an ultrathin electrochemical (EC) sensor 100 is made by printing technology. The sensor 100 comprises electrodes 106, 108 and 110, an electrolyte 112 (wherein the electrolyte typically contacts and provides electrical interaction between all the electrodes), and optionally an encapsulation layer 114, which may be printed layer by layer onto a substrate 102. The substrate 102 comprises a plurality of diffusion holes 104, wherein the electrodes 106, 108, and 110 are printed over the diffusion holes 104 (for example, with each electrode having at least one diffusion hole underlying it). The diffusion holes 104 may comprise a size, shape, a first diameter, a second diameter, and/or length that causes a capillary effect within the diffusion holes 104. The electrolyte 112 may be printed or otherwise applied over the electrodes 106, 108, and 110. The electrodes may comprise a sensing electrode 106, a reference electrode 108, and a counter electrode 110.

The encapsulation layer 114 can be used to seal the electrolyte 112 (e.g. creating an envelope applied to the substrates which seals the electrolyte and underlying electrodes). The encapsulation layer 114 can comprise any material suitable for bonding to the substrate 102 and retaining the electrolyte 112 in position on the substrate 102. Any of the materials described herein can be used for the encapsulation layer 114. Additional materials such as silicone rubber or other polymeric materials can also be used as the encapsulation layer 114. The encapsulation layer 114 may comprise a silicon or silicone material. Once disposed over the electrolyte 112 (e.g., a liquid electrolyte, a gelled electrolyte, and/or a solid electrolyte), the encapsulation layer 114 may serve as a water vapor diffusion barrier to seal the electrolyte 112 from the external environment. The encapsulation layer 114 may be flexible to allow the volume of the electrolyte 112 to change over time, for example, in response to a gain or loss of water in a hygroscopic electrolyte.

A solution of perfluorinated ion electrolyte solution (GEFC-IES the copolymer of perfluorosulfonic acid and PTFE) commercially available from Golden Energy Fuel Cell Co., Ltd. or Nafion^{®} (copolymer of tetrafluoroethylene (Teflon^{®}) and perfluoro-3,6-dioxa-4-methyl-7-octene-sulfonic acid) commercially available from DupontTM, is used as a binder. The catalyst (as described above) may be Pt, Au, Ru, Ir, Ag powder, carbon black, graphite, and/or a combination thereof. Glycol or other similar chemicals can be used as a diluent to form a catalyst slurry, recipe or catalyst system, which can be printed on a PTFE membrane by a printer. The printed element is sintered at an elevated temperature to form an electrode which can be used in an electrochemical sensor.

The sensing electrode 106, the reference electrode 108, and the counter electrode 110 can be arranged in a co-planar, non-overlapping arrangement on the surface of the substrate 102. While shown in FIG. 1 as having three electrodes, the sensor 100 can also be used with only two electrodes, for example including the sensing electrode 106 and the counter electrode 110. Four or more electrodes may also be present. For example, two or more sensing electrodes can be present and each sensing electrode may operate at a different potential to enable the detection of more than one target gas. Alternatively, four or more electrodes may be present to enable diagnostic tests to be conducted during operation of the sensor 100, continuously, periodically, or aperiodically. In some contexts, the sensing electrode 106 may also be referred to as a working electrode.

The composition, size, and configuration of the electrodes 106, 108, 110 can depend on the specific species of target gas or gasses being detected by the sensor 100.

One or more (or all) of the electrodes 106, 108, 110 can comprise a porous, gas permeable membrane. The electrode (e.g., the sensing electrode 106), may be placed over the aperture or capillary (which may also be called a diffusion hole 104). The gas diffusing through the capillary 104 may then contact and diffuse through the permeable membrane to react with the electrolyte 112 at the opposite surface of the electrode. Such an electrode can be formed of any of the materials described herein. In addition to any of the materials for forming the electrode, various hydrophobic components such as PTFE can be combined with the electrode material and/or used as a backing layer ( e.g., as a tape or support) for the electrode on the substrate 102. For example, sensing electrode 106 can comprise a catalyst such as platinum or carbon, supported on a PTFE membrane. Such as toxic gas sensors, the counter electrode 110 may comprise a catalyst mounted on a PTFE backing tape, in the same manner as the gas sensing electrode 106.

The electrodes comprise hydrophobic materials. Various coatings such as PTFE coatings can be used to provide a hydrophobic surface while maintaining a degree of porosity for gas diffusion of the target gas. The electrode material can be formed to exhibit hydrophobicity or super-hydrophobicity. The electrode material can be formed using a template material to form a patterned surface for the electrode, where the pattern may impart hydrophobic properties to the electrode. The patterning material can include any suitable material that can be removed once the electrode is formed. Nanosized polymer spheres (e.g., nanosized latex spheres-which are commercially available) can be arranged on a suitable sacrificial substrate (e.g., a metal such as copper). The electrode metal can then be electroplated around the assembled spheres to produce a suitable hydrophobic surface. The resulting electrode surface may also have porosity for gas diffusibility. Plating bath additives may be added as appropriate. Alternatively, other templating techniques such as self-assembled surfactant molecules can be used. The templating material can then be subsequently removed, for example by dissolution, heat, or the like. The resulting electrode material can then be used for one or more of the electrodes 106, 108, 110 while exhibiting hydrophobic properties. Electrodes may be formed using one or more of the methods/processes described herein.

The electrodes 106, 108, 110 may be at least partially covered by or in contact with the electrolyte 112 (and typically might all be entirely covered by the electrolyte. Electrical contact can be made with an external contact lead through one or more electrical conductors such as wires 116. The wires 116 can comprise foils, wires, or deposited materials on the substrate 102. The electrical conductors may comprise noble metals ( e.g., platinum), such as by being formed from noble metals or coated with noble metals if the conductors are in contact with the electrolyte 112. The electrical conductors may not be formed from noble metals if the electrical conductors are not in contact with the electrolyte 112.

The electrolyte 112 may comprise any material capable of providing an electrically conductive pathway between the electrodes 106, 108, 110. The electrolyte 112 may be non-reactive with the substrate 102 material. If the electrolyte 112 and the substrate 102 can react, an insulting, non-reactive layer may be placed over the substrate prior to disposition of the electrodes 106, 108, 110 and the electrolyte 112. The electrolyte 112 can comprise a liquid electrolyte, a gelled electrolyte, a solid electrolyte, or the like. The electrolyte 112 can be contained in or retained by a porous or absorbent material.

In an embodiment, the electrolyte 112 comprises an aqueous electrolyte in particular a solution of acid. The electrolyte can comprise a hygroscopic acid such as sulfuric acid for use in an oxygen sensor. For example, the electrolyte can comprise sulfuric acid having a molar concentration between about 3 M to about 10 M. Since sulfuric acid is hygroscopic, the concentration can vary from about 10 to about 70 wt% (1 to 11.5 molar) over a relative humidity (RH) range of the environment of about 3 to about 95%.

In addition to aqueous based electrolytes, ionic liquid electrolytes can also be used to detect certain gases. The ionic liquids may have a greater viscosity than a corresponding aqueous electrolyte. In any of the electrolytes, a viscosifier may be added to provide an increased viscosity, which may aid in retaining the electrolyte in contact with the electrolytes. The electrolyte can be present in the form of a gel or a semi-solid.

The electrolyte 112 can comprise a solid electrolyte. Solid electrolytes can include electrolytes adsorbed or absorbed into a solid structure such as a solid porous material and/or materials that allow protonic and or electronic conduction as formed. The solid electrolyte can be a protonic conductive electrolyte membrane. The solid electrolyte can be a perfluorinated ionexchange polymer such as Nafion or a protonic conductive polymer such as poly(ethylene glycol), poly(ethylene oxide), poly(propylene carbonate). Nafion is a hydrated copolymer of polytretafluoroethylene and polysulfonyl fluoride vinyl ether containing pendant sulfuric acid groups. When used, a Nafion membrane can optionally be treated with an acid such as H3PQ4, sulfuric acid, or the like, which improves the moisture retention characteristics of Nafion and the conductivity of hydrogen ions through the Nafion membrane. The sensing, counter and reference electrodes can be hot-pressed onto the Nafion membrane to provide a high conductivity between the electrodes and the solid electrolyte. The electrolyte 112 can be disposed on the substrate 102 as a drop or in a solid form so that the electrolyte is in electrical contact with the electrodes 106, 108, 110.

As shown in FIG. 2, the electrochemical sensor 100 also comprises a transition layer 120 positioned between the hydrophobic electrode(s) 106 (which may be similar to those described in FIG. 1) and the electrolyte 112. Electrode 106, 108 and/or 110 formed using a method as described herein may comprise increased hydrophobic characteristics when compared to traditional electrodes. In this case, the possibility of issues when applying the electrolyte to the electrode(s) may be increased as well. Therefore, a transition layer 120 is applied between the electrode(s) and electrolyte to allow contact between the two.

In FIG. 2, the sensing electrode 106 is shown, but the transition layer 120 may be applied to any or all of the electrodes 106, 108, and 110 (e.g. of FIG. 1). The transition layer 120 facilitates contact between the electrode(s) 106 and the electrolyte 112. The transition layer 120 comprises a thin, hydrophilic material. The transition layer 120 is applied to the electrode 106 before the electrolyte 112 is applied to the electrode 106.

The transition layer 120 comprises a water-immiscible solvent and a hydrophilic, inert powder. As an example, the transition layer 120 may comprise a perfluorinated ion solution and an inert silicon dioxide (SiO₂) powder. As shown in FIG. 2, the hydrophilic particles of the transition layer 120 may dispense into spaces fabricated by the catalyst of the electrode(s) 106, wherein the electrode(s) 106 may comprise approximately spherical material in the example shown in FIG. 2. With the transition layer 120, a top surface of the electrode(s) 106 may become more hydrophilic, and the electrolyte 112 can be more easily printed onto (e.g. atop) the electrode(s) 106 (e.g. on the surface opposite that contacting the substrate). The transition layer 120 may be thin enough to not interfere with interaction between the electrode(s) 106 and the electrolyte 112.

In an embodiment the method may comprise mixing approximately 19 grams (g) of perfluorinated ion solution (e.g., 5 wt% GEFC) and approximately 5 g of catalyst (e.g. one of the catalyst materials described above) to obtain a slurry. The slurry is treated with ultrasonication, e.g., for approximately 10-15 minutes, where the slurry is mixed under vacuum distillation. During the mixing, the temperature may be controlled to be approximately 50°C, and the pressure is approximately 200-300 Pa (2-3 mbar). At the beginning of the mixing, the rotation speed of a magnetic stirrer may be set to approximately 500 rpm. As the mixture thickness, the rotation speed may decrease due to the increased thickness. When the rotation speed of the magnetic stirrer has decreased to approximately 300 rpm, mixing and distillation may be stopped, producing a paste. The paste is printed onto a substrate to form the electrode(s). A stencil may be placed onto and/or above the substrate, and the paste may be applied over the stencil to form the electrode(s). The paste may be applied under a vacuum (as described above). The paste is applied over diffusion holes that extends through the substrate.

Forming the transition layer may comprise mixing approximately 4 g of perfluorinated ion solution (15 wt% GEFC) and approximately 4 g of inert SiO2 powder (e.g., AEROSIL ^{®} 200). In other words, the mixture may comprise 1 part perfluorinated ion solution to 1 part inert powder. After mixing, the mixture may be rested until bubbles disappear. Then, the mixture may be printed to form the transition layer with the same stencil as that used in printing the electrode onto the substrate. The transition layer may be heated at approximately 40-50°C for approximately 10 to 15 minutes. The heating temperature and time may be determined to maintain the hydrophilicity of the transition layer. Then, the electrolyte may be applied (e.g., printed) onto the electrode(s) comprising the transition layer. This method of forming a transition layer may also be used on electrodes formed using the above method of forming electrodes.

While various embodiments in accordance with the principles disclosed herein have been shown and described above, modifications thereof may be made by one skilled in the art without departing from the scope of the invention as defined by the appended claims.

## Claims

1. A method of manufacturing an electrochemical sensor (100), the method comprising:
providing a plurality of electrodes (106, 108, 110) over a substrate (102) comprising diffusion holes (104), the plurality of electrodes (106, 108, 110) having a hydrophobic coating and covering the diffusion holes (104) extending cylindrically through the thickness of the substrate (102);
printing a transition layer (120) over the plurality of electrodes (106, 108, 110), the transition layer (120) comprising at least a first mixture of a water immiscible liquid and a hydrophilic inert substance over the plurality of electrodes (106, 108, 110); and
applying an electrolyte layer (112) comprising at least a second mixture of an acid solution and a solid polymer over the transition layer (120), such that the transition layer is disposed between the plurality of electrodes (106, 108, 110) and the electrolyte layer (112),
wherein providing the plurality of electrodes (106, 108, 110) comprises:
mixing perfluorinated ion solution and catalyst powder to obtain a slurry,
concentrating the slurry using ultrasonication for a predetermined time period, during which the slurry is mixed under vacuum distillation at a temperature of approximately 40-50°C and a pressure of approximately 200-300 Pa (2-3 mbar), to produce a paste, and
printing the paste over the substrate (102) to form the plurality of electrodes (106, 108, 110) through annealing.

2. The method of claim 1, further comprising applying an encapsulation layer (114) comprising silicone over the electrolyte layer (112).

3. The method of claim 1, wherein the water immiscible liquid is at least one of GEFC perfluorinated ion solution and Nafion^{®} perfluorinated solution, and wherein the hydrophilic inert substance is silicon dioxide.

4. The method of claim 1, wherein the acid solution comprises one or more of sulfuric acid and phosphoric acid, and wherein the solid polymer comprises Polyvinylpyrrolidone, PVP, polymer.

5. The method of claim 1, wherein the first mixture is heated at a predetermined temperature for a predetermined time-period.

## Patentansprüche

1. Verfahren zum Herstellen eines elektrochemischen Sensors (100), das Verfahren umfassend:
Bereitstellen einer Vielzahl von Elektroden (106, 108, 110) über einem Substrat (102), das Diffusionslöcher (104) umfasst, wobei die Vielzahl von Elektroden (106, 108, 110) eine hydrophobe Beschichtung aufweist und die Diffusionslöcher (104) abdeckt, die sich zylindrisch durch die Dicke des Substrats (102) erstrecken;
Drucken einer Übergangsschicht (120) über die Vielzahl von Elektroden (106, 108, 110), wobei die Übergangsschicht (120) mindestens eine erste Mischung aus einer mit Wasser nicht mischbaren Flüssigkeit und einer hydrophilen inaktiven Substanz über der Vielzahl von Elektroden (106, 108, 110) umfasst; und
Aufbringen einer Elektrolytschicht (112), die mindestens eine zweite Mischung aus einer sauren Lösung und einem festen Polymer umfasst, über der Übergangsschicht (120), sodass die Übergangsschicht zwischen der Vielzahl von Elektroden (106, 108, 110) und der Elektrolytschicht (112) angeordnet ist,
wobei das Bereitstellen der Vielzahl von Elektroden (106, 108, 110) Folgendes umfasst:
Mischen einer perfluorierten Ionenlösung und eines Katalysatorpulvers, um einen Schlamm zu erhalten,
Konzentrieren des Schlamms unter Verwendung von Ultraschalleinwirkung über einen vorherbestimmten Zeitraum,
während dem der Schlamm unter Vakuumdestillation bei einer Temperatur von etwa 40-50 °C und einem Druck von etwa 200-300 Pa (2-3 mbar) gemischt wird, um eine Paste zu erzeugen, und
Drucken der Paste über das Substrat (102), um die Vielzahl von Elektroden (106, 108, 110) durch Tempern auszubilden.

2. Verfahren nach Anspruch 1, ferner umfassend das Aufbringen einer Verkapselungsschicht (114), die Silikon umfasst, über der Elektrolytschicht (112).

3. Verfahren nach Anspruch 1, wobei die mit Wasser nicht mischbare Flüssigkeit mindestens eines aus einer GEFC-perfluorierten Ionenlösung und einer Nafion^{®}-perfluorierten Lösung ist, und wobei die hydrophile inaktive Substanz Siliziumdioxid ist.

4. Verfahren nach Anspruch 1, wobei die saure Lösung eine oder mehrere aus Schwefelsäure und Phosphorsäure umfasst, und wobei das feste Polymer Polyvinylpyrrolidon, PVP, -Polymer umfasst.

5. Verfahren nach Anspruch 1, wobei die erste Mischung bei einer vorherbestimmten Temperatur über einen vorherbestimmten Zeitraum erwärmt wird.

## Revendications

1. Procédé de fabrication d'un capteur électrochimique (100), le procédé comprenant :
la mise à disposition d'une pluralité d'électrodes (106, 108, 110) sur un substrat (102) comprenant des trous de diffusion (104), la pluralité d'électrodes (106, 108, 110) ayant un revêtement hydrophobe et couvrant les trous de diffusion (104) s'étendant de manière cylindrique à travers l'épaisseur du substrat (102) ;
l'impression d'une couche de transition (120) sur la pluralité d'électrodes (106, 108, 110), la couche de transition (120) comprenant au moins un premier mélange d'un liquide non miscible à l'eau et d'une substance inerte hydrophile sur la pluralité d'électrodes (106, 108, 110) ; et
l'application d'une couche d'électrolyte (112) comprenant au moins un deuxième mélange d'une solution acide et d'un polymère solide sur la couche de transition (120), de sorte que la couche de transition soit disposée entre la pluralité d'électrodes (106, 108, 110) et la couche d'électrolyte (112),
dans lequel la mise à disposition de la pluralité d'électrodes (106, 108, 110) comprend :
le mélange d'une solution ionique perfluorée et d'une poudre catalytique pour obtenir une suspension,
la concentration de la suspension à l'aide d'une ultrasonication pendant une période de temps prédéterminée,
pendant laquelle la suspension est mélangée sous distillation sous vide à une température d'environ 40-50 °C et une pression d'environ 200-300 Pa (2-3 mbar), pour produire une pâte, et
l'impression de la pâte sur le substrat (102) pour former la pluralité d'électrodes (106, 108, 110) par recuit.

2. Procédé de la revendication 1, comprenant en outre l'application d'une couche d'encapsulation (114) comprenant du silicone sur la couche d'électrolyte (112).

3. Procédé de la revendication 1, dans lequel le liquide non miscible à l'eau est au moins l'une parmi une solution ionique perfluorée GEFC et une solution perfluorée Nafion^{®}, et dans lequel la substance inerte hydrophile est le dioxyde de silicium.

4. Procédé de la revendication 1, dans lequel la solution acide comprend un ou plusieurs des acides sulfurique et phosphorique, et dans lequel le polymère solide comprend le polymère Polyvinylpyrrolidone, PVP.

5. Procédé de la revendication 1, dans lequel le premier mélange est chauffé à une température prédéterminée pendant une période de temps prédéterminée.
